# EUROPEAN PATENT SPECIFICATION

(11) **EP 3 883 150 B1**
(45) Date of publication and mention of the grant of the patent: **12.03.2025**
(21) Application number: 19883785.8
(22) Date of filing: 29.10.2019
(51) Int. Cl.: H04J 3/06

(54) **TIME SYNCHRONIZATION METHOD AND NETWORK DEVICE**
ZEITSYNCHRONISIERUNGSVERFAHREN UND NETZWERKVORRICHTUNG
PROCÉDÉ DE SYNCHRONISATION TEMPORELLE ET DISPOSITIF DE RÉSEAU

(30) Priority: 13.11.2018 CN 201811348182
(43) Date of publication of application: 22.09.2021
(73) Proprietor: Sanechips Technology Co., Ltd., Shenzhen, Guangdong 518055 (CN)
(72) Inventor: CHEN, Sisi, Shenzhen, Guangdong 518055 (CN)
(74) Representative: Canzler & Bergmeier Patentanwälte Partnerschaft mbB
(86) International application number: PCT/CN2019/114075
(87) International publication number: WO 2020/098489

(56) References cited:
- EP-A1- 2 472 754
- CN-A- 101 958 745
- CN-A- 102 130 735
- CN-A- 104 471 883
- US-A1- 2016 170 440
- US-A1- 2018 191 802
- US-B1- 8 949 448

## Description

### Technical Field

The invention relates to the field of network technology, and in particular to a time synchronization method, a network device.

### Background

With the development of network technology, time synchronization between network devices has been gradually improved, and has reached the level of nanosecond (ns). At present, the network devices mainly use the second version (V2) of the 1588 protocol released by IEEE in 2009 for time synchronization. The 1588 protocol uses a Precision Time Protocol (PTP) packet structure to carry time information. And only a few data packing formats, such as IEEE802.3, Ethernet, PTP based on the network address version 4 (IPv4) and PTP based on the network address version 6 (IPv6), are specified. The time information is synchronized through a Media Access Control (MAC) layer or a higher layer.

It is found in practice that when time information is transmitted in this way, and the synchronization is performed based on the time information, there are problems of low synchronization accuracy, long synchronization and convergence process, and a limited scope of use because in some cases, a receiving end cannot extract the time information for synchronization.

U.S. Patent US 8,949,448 B1 discloses a system and method for improving a timestamp precision in a precision timestamp protocol (PTP) device. The present invention provides for dynamic adjustment of otherwise uncertainty of the latency of a connection between two devices connected together through a gearbox and/or a block sync circuit. The dynamic adjustment is accomplished by identifying the alignment of data within the gearbox and block sync and adjusting the timestamp assigned to the data based upon the identified alignment to remove the jitter associated with the gearbox and the block sync, thereby improving the timestamp precision in the PTP device. In a particular embodiment, the invention is employed in a serial-deserializer (SERDES) device.

### Summary

In view of this, embodiments of the invention are intended to provide a time synchronization method, a network device to at least partially solve the above problems.

The invention is set out in the appended set of claims.

### Brief Description of the Drawings

Fig. 1 shows a flowchart of a first time synchronization method provided by an embodiment of the invention.
Fig. 2 shows a flowchart of a second time synchronization method provided by an embodiment of the invention.
Fig. 3 shows a flowchart of a third time synchronization method provided by an embodiment of the invention.
Fig. 4 shows a structure diagram of a first network device provided by an embodiment of the invention.
Fig. 5 shows a structure diagram of a second network device provided by an embodiment of the invention.
Fig. 6 shows a structure diagram of a network device provided by an embodiment of the invention.
Fig. 7 shows a synchronization information transmission method for time synchronization provided by an embodiment of the invention.
Fig. 8 shows a structure diagram of another network device provided by an embodiment of the invention.

### Detailed Description of the Embodiments

The technical solution of the invention is further described in detail below in combination with the accompanying drawings and specific embodiments.

It is found that when time information packed based on the 1588 protocol is transmitted among multiple devices requiring time information synchronization, a receiving end needs to unpack the time information layer by layer after receiving it, which usually needs to use physical resources of an MAC layer or a higher layer above the MAC layer in a device for processing, resulting in the large processing complexity, so the synchronization convergence process takes a long time, and the delay is large. Meanwhile, when the data is transmitted transparently, a transit device does not recognize the meaning expressed by the content of the data, which leads to the failure of synchronization between a transparent transmission device and a sending end, resulting in narrow application scenarios. More importantly, a physical layer port is directly connected to a transmission medium layer, if a time carrier needs the MAC layer or the higher layer above the MAC layer for processing to obtain the time information and pack it into a package, the time itself consumes a lot of time, and the time consumption is ignored during the synchronization of time information, resulting in the decrease of synchronization precision. In view of this, the embodiment of the invention directly uses a port very close to a physical transmission medium to carry directly a locating synchronization block for synchronization. After receiving a signal carrying an ST, the port of the receiving end can obtain the ST directly at a Physical Media Adaption (PMA) sublayer of the physical layer. It is apparent that this distance is shorter than the distance between the MAC layer and the physical medium, thus reducing the problem of poor synchronization effect caused by the time consumption caused by this transmission distance, improving the synchronization effect, and realizing the synchronization at the ns level. Meanwhile, because the MAC layer and the high layers above the MAC layer are not required to participate in data packing and unpacking, resource consumption of a network device is reduced, and the time consumed in packing and unpacking is reduced, so that the synchronization efficiency is higher and a synchronization convergence speed is higher. Furthermore, because the ST is directly inserted into a bit where the port is, even if it is transparently forwarded, a forwarding device has no need to extract information represented by a signal, but directly extracts the ST, thus realizing the synchronization and expanding an application scope.

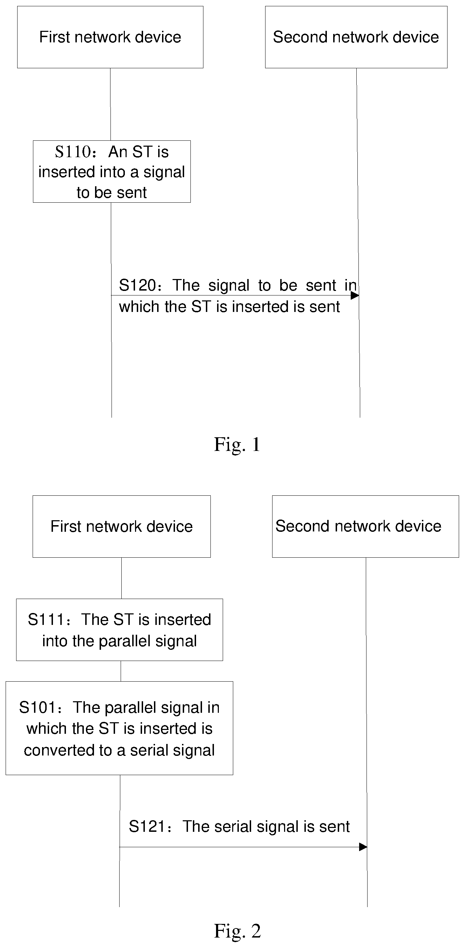

As shown in Fig. 1, an embodiment provides a time synchronization method, which is applied to a first network device, and the method may include the following steps.

At S110, an ST is inserted into a signal to be sent, the ST including a synchronization byte used for positioning and a timing byte used for carrying synchronization information of a second network device for time synchronization.

At S120, the signal to be sent in which the ST is inserted is sent.

In the embodiment, the first network device may be a device initiating the time synchronization, and other network devices synchronize with it.

In the embodiment, the synchronization information synchronizes the timing of two network devices. In addition to keeping clock synchronization of timers, two network devices need to synchronize the time information. The clock synchronization here is that two timers time equally for the same physical period of time. For example, a certain physical period of time is 1 second, timer A times 1 second, and timer B times 0.9 seconds, which is clock synchronization. After the clock synchronization is completed, the timer A may time the current time as t1, and the timer B may time the current time as t2, at this point, the timing of the current time of the timer A and the timer B needs to be unified. This synchronization is the synchronization of the time information in the application, also referred to as time synchronization.

In the embodiments of the invention, before the time synchronization is performed, the time information for synchronization needs to be transmitted.

In the embodiment, the ST is directly inserted into the signal to be sent. The signal to be sent here is a bit sequence to be sent.

For example, the first network device includes: a physical layer interface module, which may be a serial interface module for sending a serial signal or a parallel interface module for sending a parallel signal.

In the embodiment, the typical serial interface module may include a serializer and a deserializer, and the combination of the serializer and the deserializer referred to as SerDes. The SerDes will insert the ST into the signal to be sent. The ST includes two parts, one part is a synchronization block for locating the ST, and the other part is a timing block. Usually the bit sequence corresponding to the synchronization block is known or predetermined. The timing block is used for carrying time information to be transmitted or indication information related to the time information and used for indicating realization information. In the embodiment, the time information and/or the indication information is collectively called synchronization information.

In S120, the signal to be sent carrying the ST will be sent, so that the ST for time synchronization can be received and recognized through a physical layer interface, regardless of whether the peer (i.e., a second network device) needs to parse the received signal or transmit it transparently. Thus, the transmission of time information is easily completed.

In the embodiments of the invention, both the synchronization byte and locating byte may include: one or more bytes. For example, in some embodiments, both the synchronization byte and the timing byte include only one byte, so that one of the STs consumes 16 bits. If the synchronization byte is a high-order byte, then the timing byte is a low-order byte. If the synchronization byte is a low-order byte, then the timing byte is a high-order byte. Taking that the synchronization byte and the timing byte are both one byte as an example, optionally the high-order byte is high 8 bits, and the low-order byte is low 8 bits. In some other embodiments, both the synchronization byte and the timing byte may include: two or more than two bytes.

Optionally, as shown in Fig. 2 S110 may include S111. S111 may include that: the ST is inserted into the parallel signal. The ST includes: the synchronization byte used for positioning and the timing byte used for carrying the synchronization information of the second network device for time synchronization.

The method may further include S101, in which the parallel signal in which the ST is inserted is converted to a serial signal.

S120 may include S121. S121 may include: the serial signal is sent.

The physical interface module included in the first network device provided in the embodiment is a serial interface module, which will convert multiple low-speed parallel signals into the serial signals and send. For example, by the Serdes in the first network device, then the parallel signal is extracted from an FIFO queue. The ST is inserted into the parallel signal. The parallel signal in which the ST is inserted is sent to an encoder and/or a scrambler for encoding and/or scrambling processing. The encoded and/or scrambled signal is transmitted to the serializer, and then the serializer converts multiple parallel signals to a serial signal, and the serial signal is submitted to the transmission medium, for example, a transmission cable or an optical cable, by a driver to be transmitted to the peer.

In the embodiment, the ST is directly inserted into the parallel signal, and Parallel-serial conversion is performed after the ST is inserted. In some other embodiments, the ST may also be directly inserted into the serial signal after the Parallel-serial conversion is completed and then sent out.

In the embodiment, the ST is inserted in the parallel signal. Thus the problem of low recognition rate at the receiving end caused by multiple consecutive "0" or multiple consecutive "1" caused by the signal to be sent itself and/or by inserting the ST is avoided through the processing of the parallel signal by the encoder and/or the scrambler, and the signal recognition rate may be improved.

S111 may include the following steps: the ST carrying first time information is inserted into the parallel signal; after the ST carrying second time information which is sent by the second network device is received, third time information that the ST carrying the second time information is received is inserted, through the ST, into the parallel signal sent to the second network device. The first time information, the second time information, the third time information and fourth time information that the second network device receives the ST carrying the third time information are jointly used for the second network device to calculate a time offset from the first network device.

The step of the time offset is calculated may include: a first time difference between the first time corresponding to the first time information and the second time corresponding to the second time information is calculated; a second time difference between the third time corresponding to the third time information and the fourth time corresponding to the fourth time information is calculated; 1/2 of the difference between the first time difference and the second time difference is calculated as the time offset; and the second network device may directly adjust its timing information according to the time offset, so as to realize the time synchronization.

Optionally, N STs form an ST group, N being an integer not less than 2. There may be more than one value, for example, the value may be any positive integer not less than 2. In the embodiment, the value of N is determined by the number of bits needed to carry the synchronization information and the number of bits provided by a single timing byte. For example, 32 bits are needed to carry the synchronization information, and each of the timing bytes may provide 8 bits, then the value of N is not less than 32/8. Generally, N=Y1/X= 1+Y2/X. The Y1 is the number of bits consumed by a piece of synchronization information, and the Y2 is the number of bits consumed by the time information. The synchronization information may include time information and indication information. The X is the number of bits provided by a single timing byte. For example, the time information needs 64 bits, the indication needs 8 bits, and one timing byte provides 8 bits, then N=(64+8)/8=9, or N=1+64/8=9.

In the embodiment, multiple STs form an ST group. The STs are inserted in the order of each ST. For example, if the x-th of the STs is inserted at the previous insertion time, then the (x+1)-th ST is inserted at the current insertion time.

For example, taking that an ST group includes 9 STs as an example, the STs may be numbered from 1 to 9, and are represented by S1T1, S2T2, S3T3, S4T4, S5T5, S6T6, S7T7, S8T8, and S9T9 respectively, Sx representing the synchronization byte of the x-th ST, and Tx representing the timing byte of the x-th ST. The values of x may be integers from 1 to 9.

The timing byte T1 in the first synchronization timing block S1T1 is used for carrying one of the following information:
a time parameter indicator, used for indicating the purpose of the time information carried by the timing byte Tn in the current ST group, the value of n being 2 to N;
an information type indicator, used for indicating an information type carried by the timing byte Tn in the current ST group;
an insertion interval indicator, which is used for indicating interval bits and/or interval bytes between the synchronization byte S and the timing byte T in one ST; in some examples, the S and the T of an ST may be inserted adjacent to each other or at intervals; when they are inserted at intervals, it is needed to inform the second network device of the interval between the S and the **T,** so that after locating the S and waiting for one or more bits equal to the insertion interval, the second network device extracts the T to obtain the time information and/or indication information in the T; and
an indication content field, which is used for carrying detailed information corresponding to the information type. In the embodiment, the information type indicator indicates a time type. A certain information type may be divided into several subtypes, and the indication content may be the corresponding subtypes. For example, the information type indicator indicates that the time information currently carried is a time quality level. The time quality level may be divided into 5 levels, and the specific level of these several levels is carried by the indication content field.

A purpose type indicator, which may be used for indicating the purpose of the time information currently sent. For example, the time information is sending time, receiving time or no time carried.

So, in some embodiments, the time parameter indicator includes at least one of the following:
a starting time indicator, which is used for indicating the starting time of time synchronization; the starting time here is a time point at which two network devices performing time synchronization start the time synchronization, and the two network devices usually start according to their own current time;
a sending time indicator, which is used for indicating the time of sending the S1T1;
a receiving time indicator, which is used for indicating the receiving time of a peer device based on the S1T1; and
a blank indicator, which is used for indicating that the Tn does not carry the time information.

In an embodiment, T1 in an ST may not carry the specific time information, but carry a variety of indication information. One or more of T2 to TN are used to carry the time information.

In this way, after receiving the first inserted S1T1, the receiving end may know whether the SxTx in the subsequent received signals carries the time information and for what purpose.

Optionally, the information type indicator includes at least one of the following: a time quality level, synchronization modes, a query request, and an update request.

The synchronization modes include a first mode, a second mode and a third mode. When a port mode is the first mode, it is a device that does not participate in the time synchronization, when the port mode is the second mode, it is a time issuer that provides the time information, and when the port mode is the third mode, it is a time receiver that receives the time information. In some embodiments, the first mode is also an asynchronous mode, and the second mode and the third mode are synchronous modes. The synchronous mode may also be divided into the second mode providing synchronization and the third mode participating in synchronization.

The query request is used for requesting a query for the peer device to provide the synchronization information, requesting a query for the synchronization mode of the peer, and requesting a query for the starting time determined by a synchronization provider and other information.

The update request is used for providing an update of the synchronization information to the peer device, and providing some synchronization related update information about itself to the peer; for example, the update of its own synchronization mode, the update of its own information type and the update of the starting time may all be realized through the update request.

Optionally, in order to achieve a high recognition rate of synchronization between the network devices and avoid the problem of low synchronization efficiency caused by the low recognition rate, the contents of the synchronization bytes are usually different. For example, the contents of the synchronization bytes of multiple adjacent STs in an ST group are different. This difference may be represented by the difference of one or more bits in a bit sequence. Typically, for example, the bit sequences are opposite. In the embodiment, that the bit sequences are opposite means that the corresponding bit of one of the two bit sequences is "1", and the corresponding bit of the other bit sequence is "0". For example, the opposite bit sequence of the bit sequence "10100010" is "01011101".

In order to improve the recognition rate and thus achieve accurate synchronization, two optional structures for the bit sequence of the ST group are provided below.

The first structure is that:
when the ST group includes an odd number of STs, the ST group includes: the first type of ST group and the second type of ST group. The synchronization byte in the first type of ST group has an opposite value to that in the second type of ST group.

When the ST group is inserted, the first type of ST and the second type of ST are inserted at intervals.

The second structure is that:
y STs distributed adjacently in the ST group are an ST subgroup, and the synchronization bytes of two adjacent synchronization block subgroups have opposite values. In this way, when the ST group includes an even number of STs, only one type of ST group is needed. If the ST group includes an even number of STs, sequence reverse may also be achieved among multiple subgroups of each type of ST group, which may improve the recognition rate of the receiving end again.

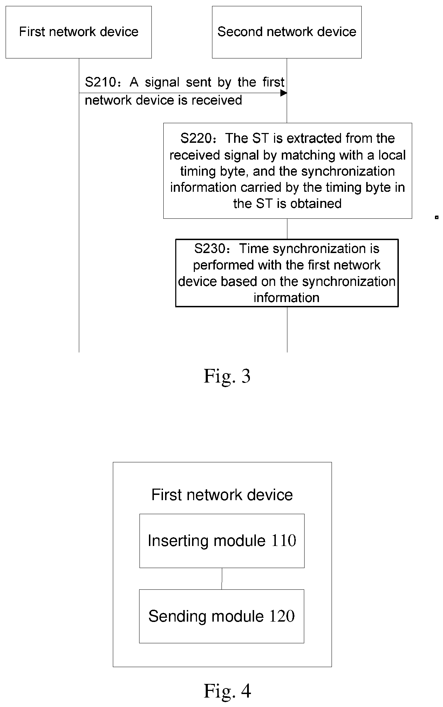

As shown in Fig. 3, an embodiment provides a time synchronization method applied to a second network device, which may include the following steps.

At S210, a signal sent by the first network device is received.

At S220, the ST is extracted from the received signal by matching with a local timing byte, and the synchronization information carried by the timing byte in the ST is obtained.

At S230, time synchronization is performed with the first network device based on the synchronization information.

In the embodiment, the second network device is a network device that participates in synchronization and needs to synchronize its own time with the first network device.

First, the second network device may receive, through a network interface, the signal sent by the first network device and transmitted from the transmission medium. The local synchronization byte is used to match the received signal. If matched, the ST is considered detected, and the synchronization information is extracted from the ST. The synchronization information here may include the time information and/or the indication information.

Optionally, S210 may include that: the serial signal sent by the first network device is received.

The method may further include that: the serial signal is converted to the parallel signal.

S220 may include: the ST is extracted from the parallel signal by matching with the local timing byte, and the synchronization information carried by the timing byte in the ST is obtained.

In the embodiment, the composition of the ST may be seen in a related embodiment of a time information transmission method applied to the first network device.

Furthermore, S220 may further include the following step: by matching with the local timing byte, the first time information is extracted from the timing byte, which is successfully matched with the local timing byte, of the ST.

The method may further include the following steps: the second time information that the ST carrying the first time information is received is recorded; the ST carrying the second time information is inserted into the signal sent to the first network device; the signal sent by the first network device is received. The ST carrying the third time information is inserted into the signal, and the third time information is the time information that the first network device receives the ST carrying the second time information; the fourth time information that the ST carrying the third time information is received is recorded; the time offset from the first network device is calculated based on the first time information, the second time information, the third time information and the fourth time information; the time information of the second network device is calibrated according to the time offset.

In the embodiment, the second network device and the first network device calculate the time offset through two synchronization information interactions, and the time information of the second network device is calibrated based on the calculated time offset, so as to complete the synchronization.

In some other embodiments, the first network device and the second network device may calculate the time offset based on the receiving and sending of the synchronization information only once.

In an exemplary embodiment, the method may further include: a synchronization condition with the first network device is determined according to a receiving condition of the ST, and the synchronization condition includes: a synchronous state in sync with the first network device, and/or an asynchronous state out of sync with the first network device.

Herein, the step of the synchronization condition with the first network device is determined according to the receiving condition of the ST may include: when it is determined that the two STs sent by the first network device are successfully received, it can be determined that the second network device and the first network device are in the synchronous state, otherwise they are in the asynchronous state; and/or, when the second network device successfully obtains the first time information, the second time information, the third time information and the fourth time information mentioned above, it can be determined that the second network device and the first network device are in the synchronous state, otherwise they are in the asynchronous state.

In some other embodiments, after the second network device calculates the time offset by using the above method and completes the calibration of time information, the method may also include:
the receiving of the ST of the first network device is continued;
the time information is extracted from the ST, and the first current time information is calculated based on the time difference between the second time information and the first time information; the first current time information is compared with the second current time information timed by the first network device itself, if the time difference between the first current time information and the second time information is in a preset time range, it can be considered that the second network device and the first network device are in the synchronous state; otherwise it can be considered that they are in the asynchronous state;

If it is determined that they are in the asynchronous state, it is necessary to perform the next receiving and sending of the ST and continue the time synchronization.

As shown in Fig. 4, the embodiment provides a network device. The network device is the first network device and may include an inserting module 110 and a sending module 120.

The inserting module 110 is configured to insert the ST into the signal to be sent. The ST includes: the synchronization byte used for positioning and the timing byte used for carrying the synchronization information of the second network device for time synchronization.

The sending module 120 is configured to send the signal to be sent in which the ST is inserted.

Corresponding to a processing chip for inserting bits in the bit sequence or bit stream, the inserting module 110 may be a processing chip and/or circuit of the physical layer.

The sending module 120 belongs to the PMA sublayer of the physical layer, corresponding to the network interface of the network device.

Optionally, the inserting module 110 is configured to insert the ST into the parallel signal. The ST includes: the synchronization byte used for positioning and the timing byte used for carrying the synchronization information of the second network device for time synchronization.

The network device may further include a serial-parallel conversion module.

The serial-parallel conversion module, which corresponds to the Serial-parallel converter, may be configured to convert the parallel signal in which the ST is inserted to the serial signal.

The sending module 120 is configured to send the serial signal.

Optionally, the inserting module 110 is configured to insert the ST carrying the first time information into the parallel signal.

The sending module 120 is further configured to, after receiving the ST carrying second time information which is sent by the second network device, insert, through the ST, the third time information that the ST carrying the second time information is received into the parallel signal sent to the second network device. The first time information, the second time information, the third time information and fourth time information that the second network device receives the ST carrying the third time information are jointly used for the second network device to calculate the time offset from the first network device.

Optionally, N STs form an ST group, N being an integer not less than 2. The timing byte T1 in the first synchronization timing block S1T1 is used for carrying one of the following information: the time parameter indicator, used for indicating the purpose of the time information carried by the timing byte Tn in the current ST group, the value of n being 2 to N; the information type indicator, used for indicating the information type carried by the timing byte Tn in the current ST group; the insertion interval indicator, used for indicating the interval bits and/or interval bytes between the synchronization byte S and the timing byte T in one ST; and the indication content field, used for carrying the detailed information corresponding to the information type.

Optionally, the time parameter indicator includes at least one of the following: the starting time indicator, used for indicating the starting time of time synchronization; the sending time indicator, used for indicating the time of sending the S1T1; the receiving time indicator, used for indicating the receiving time of the peer device based on the S1T1; and the blank indicator, used for indicating that the Tn does not carry the time information.

Optionally, the information type indicator includes at least one of the following:
the time quality level;
the synchronization modes, including the first mode, the second mode and the third mode; when the port mode is the first mode, it is the device that does not participate in the time synchronization, when the port mode is the second mode, it is the time issuer that provides the time information, and when the port mode is the third mode, it is the time receiver that receives the time information;
the query request, used for requesting a query for the peer device to provide the synchronization information; and
the update request, used for providing the update of the synchronization information to the peer device.

Optionally, when the ST group includes an odd number of STs, the ST group includes: the first type of ST group and the second type of ST group. The synchronization byte in the first type of ST group has an opposite value to that in the second type of ST group; the first type of ST group and the second type of ST group are inserted into the sequence to be sent at intervals; and/or, y STs distributed adjacently in the ST group are the ST subgroup; and the synchronization bytes of two adjacent synchronization block subgroups have opposite values.

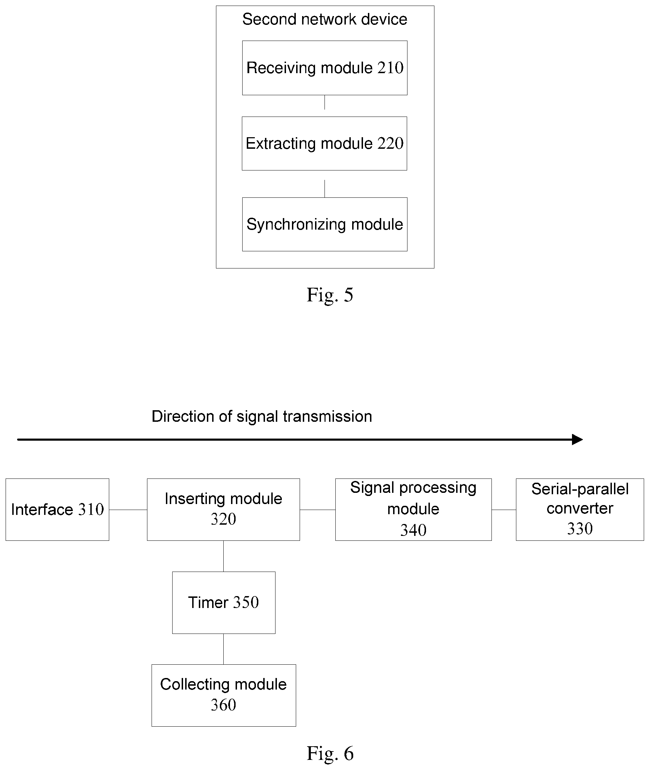

As shown in Fig. 5, the embodiment provides a network device. The network device is the second network device and may include a receiving module 210, an extracting module 220, and a synchronizing module 230.

The receiving module 210, corresponding to the interface of the PMA sublayer of the physical layer, may be configured to receive the signal sent by the first network device.

The extracting module 220, corresponding to the processing chip and/or circuit of the physical layer, may be configured to extract the ST from the received signal by matching with the local timing byte, and obtain the synchronization information carried by the timing byte in the ST.

The synchronizing module 230, corresponding to the processing chip and/or circuit of the physical layer, may be configured to perform time synchronization with the first network device based on the synchronization information.

The receiving module 210 may be configured to receive the serial signal sent by the first network device.

The second network device may further include a serial-parallel conversion module and an extracting module 220.

The serial-parallel conversion module, which includes the Serial-parallel converter, is configured to convert the serial signal to the parallel signal.

The extracting module 220 may be specifically configured to extract the ST from the parallel signal by matching with the local timing byte, and obtain the synchronization information carried by the timing byte in the ST.

The extracting module 220 is specifically configured to extract, by matching with the local timing byte, the first time information from the timing byte, which is successfully matched with the local timing byte, of the ST.

The second network device may further include: a recording unit, a communication module, a receiving module 210, a recording module, a calculating module, a calibrating module, and a determining module.

The recording unit includes a storage medium and may be configured to record the second time information that the ST carrying the first time information is received.

The communication module is configured to insert the ST carrying the second time information into the signal sent to the first network device.

The receiving module 210 is configured to receive the signal sent by the first network device. The ST carrying the third time information is inserted into the signal, and the third time information is the time information that the first network device receives the ST carrying the second time information.

The recording module is configured to record the fourth time information that the ST carrying the third time information is received.

The calculating module, corresponding to a calculator and the like, may be configured to calculate the time offset from the first network device based on the first time information, the second time information, the third time information and the fourth time information.

The calibrating module, corresponding to the processing chip and/or the processing circuit, may be configured to calibrate the time information of the second network device according to the time offset.

The second network device may further include a determining module.

The determining module is further configured to determine the synchronization condition with the first network device according to the receiving condition of the ST. The synchronization condition includes: the synchronous state in sync with the first network device, and/or the asynchronous state out of sync with the first network device.

As shown in Fig. 6, the embodiment provides a network device, which may include: an interface 310, an inserting module 320, and a Serial-parallel converter 330.

The interface 310 is configured to receive the parallel signal according to FIFO.

The inserting module 320 is connected with the interface 310 and configured to insert the ST into the parallel signal. The ST includes: the synchronization byte used for positioning and the timing byte used for carrying the synchronization information of the second network device for time synchronization.

The Serial-parallel converter 330 is connected with the inserting module 320 and configured to convert the parallel signal in which the ST is inserted to the serial signal.

The interface 310 is the physical layer interface 310.

The inserting module 320, corresponding to the processing chip and processing circuit, may be configured to insert the ST.

The Serial-parallel converter 330 is configured to perform conversion between the serial signal and the parallel signal.

The network device may further include a signal processing module 340.

The signal processing module 340 includes: an encoder and/or a scrambler between the inserting module and the Serial-parallel converter, configured to encode and/or scramble the parallel signal in which the ST is inserted.

Optionally, the first network device may further include: a timer 350 and a collecting module 360.

The timer 350 is configured for timing.

The collecting module 360 is connected with the timer and configured to collect the time information of the timer. The time information is a component of the synchronization information.

Furthermore, the interface 310 is further configured to receive the serial signal from the transmission medium.

The Serial-parallel converter 330 is further configured to convert the serial signal to the parallel signal.

The network device may further include: an extracting module and a calculating module.

The extracting module is configured to match the parallel signal with the local synchronization byte, extract the ST from the received signal and obtain the synchronization information carried by the timing byte in the ST.

The calculating module is connected with the extracting module and configured to calculate the time offset based on the synchronization information.

The timer is connected with the calculating module and configured to calibrate its own time information according to the time offset.

The network device provided by the embodiment may be the first network device or the second network device mentioned above.

The embodiments of the invention provide a computer storage medium for storing a computer program. After being executed, the computer program can implement the time synchronization method provided by one or more technical solutions mentioned above, for example, can perform one or more time synchronization methods applied to the first network device, or can perform one or more time synchronization methods applied to the second network device.

The computer storage medium can be various types of storage medium, such as a mobile hard disk, an optical disc, and a magnetic tape, and can be a non-instantaneous storage medium.

A few specific examples are provided below in combination with any of the above embodiments.

### Example one

The embodiments of the invention provide a network device. The network device may include: a serial interface SerDes. The technical solution for achieving high precision time synchronization between the network devices through the ST may include the followings.

First, data structure for carrying the time information.

An ST may be two bytes with a total of 16 bits, the first byte (low 8 bits) is the synchronization byte S(Synchronization), and the second byte (high 8 bits) is the timing byte T(Timing). The synchronization byte S is used for synchronization, namely locating, of the ST on a SerDes data transmission channel. The timing byte T is used for transmitting time synchronization related information and a time stamp. The synchronization related information here may be one of the above indication information. The time stamp is an abbreviation and may be one of the above time information.

The ST group may be composed of 9 STs, which may be respectively written as S1T1, S2T2, S3T3, S4T4, S5T5, S6T6, S7T7, S8T8, and S9T9. The ST group may be divided into two types. The synchronization byte of the first type of ST group has an opposite value to that of the second type of ST group.

For example, the first type of ST group may be as follows:
S1=M1, S2=M2, S3=M3, S4=~M1(M1 is converted in bits), S5=~M2(is converted in bits), S6 =~M3(M3 is converted in bits), S7=M1, S8=M2, and S9=M3.

For another example, the second type of ST group may be as follows:
S1=~M1, S2=~M2, S3=~M3, S4=M1, S5=M2, S6=M3, S7=~M1, S8=~M2, and S9=~M3.
S1, S2 and S3 are in a ST subgroup. S4, S5 and S6 are in another ST subgroup. S7, S8, and S9 are in another ST subgroup.

The value of the synchronization byte may be determined or selected from a value table of the synchronization byte. The value table includes alternative values for a variety of synchronization bytes.

The value of the synchronization byte (S) may be selected from one of the following 20:
{M3, M2, M1}={B'hs1s2, B'hs1s2, B'hs1s2}, where B represents the number of bits included in one timing byte, h represents hexadecimal system, and s1s2 represents a specific value.

The following is alternative values for three feature bytes with the highest recognition rate (that is, the lowest bit error rate) of the synchronization bytes in Ethernet. That is, {M3, M2, M1} may be selected from one or more of the following values.

{8'h21, 8'h68, 8'hC1}, {8'h8E, 8'h71, 8'h9D}, {8'hE8, 8'h4B, 8'h59}, {8'h7B, 8'h95, 8'h4D}, {8'h09, 8'h07, 8'hF5}, {8'hC2, 8'h14,8'hDD}, {8'h26, 8'h4A, 8'h9A}, {8'h66, 8'h45, 8'h7B}, {8'h76, 8'h24, 8'hA0}, {8'hFB, 8'hC9, 8'h68}, {8'h99, 8'h6C, 8'hFD}, {8'h55, 8'h91,8'hB9}, {8'hB2, 8'hB9, 8'hB9, 8'h5C}, {8'hBD, 8'hFB, 8'h1A}, {8'hCA, 8'hC7, 8'h83}, {8'hCD, 8'h36, 8'h35}, {8'h4C, 8'h31, 8'hC4}, {8'hB7, 8'hD6,8'hAD}, {8'h2A, 8'h66, 8'h5F}, {8'hE5, 8'hF0, 8'hC0}.

The timing byte T1 carries the time synchronization related information of the network device, and T2~T9 with a total of 64 bits carry a time value. The time value is 64 bits in ns, and the natural time is represented by the starting time plus relative time. The starting time is a time starting point set by the network device for timing, and the relative time is a time difference taking the starting time as the starting point. The timer and the time stamp for time synchronization use the relative time.

In the following description, [y2:y1] represents from the y1-th bit to the y2-th bit. The meaning of each of the 8 bits in T1 is as follows.

The bit [1:0] represents the category indication of time parameters, which may include: 0(START), 1(SEND), 2(FEEDBACK) and 3(NOTIME).

START is used for indicating the starting time.

SEND is a sending time stamp when the ST S1T1 is actively sent to the peer.

FEEDBACK is a receiving time stamp when the time stamp category sent by the peer that is the sent ST S1T1 is received.

NOTIME is no.

The bit [4:2] represents information categories, including: 0 (time quality level), 1 (port mode), 2 (query request), 3 (update request), and other (reserved).

The bit [7:5] represents information contents. When the information category is 0, the values 0~4 represent 5 levels, and the smaller the value is, the higher the level is; and the values 5~7 are reserved for use. When the information category is 1, the value 0 represents a party not performing time synchronization, the value 1 represents a time issuer, the value 2 represents a time receiver, and the values 3~7 are reserved for use. When the information category is 2, the value 0 represents a query of the time quality level of the peer, the value 1 represents a query of the port mode of the peer, the value 3 represents a query of the starting time of the peer, and the values 4~7 are reserved for use. When the information category is 3, the values 0~7 are reserved for use.

T2~T9 are used for transmitting the starting time and a sampling time stamp for the receiving and sending of the ST, with 64 bits of time value. T2=bit [7:0], T3=bit [15:8], T4=bit [23:16], T5=bit [31:24], T6=bit [39:32], T7=bit [47:40], T8=bit [55:48], and T9=bits [63:56].

Second, a SerDes time synchronization logic processing procedure.

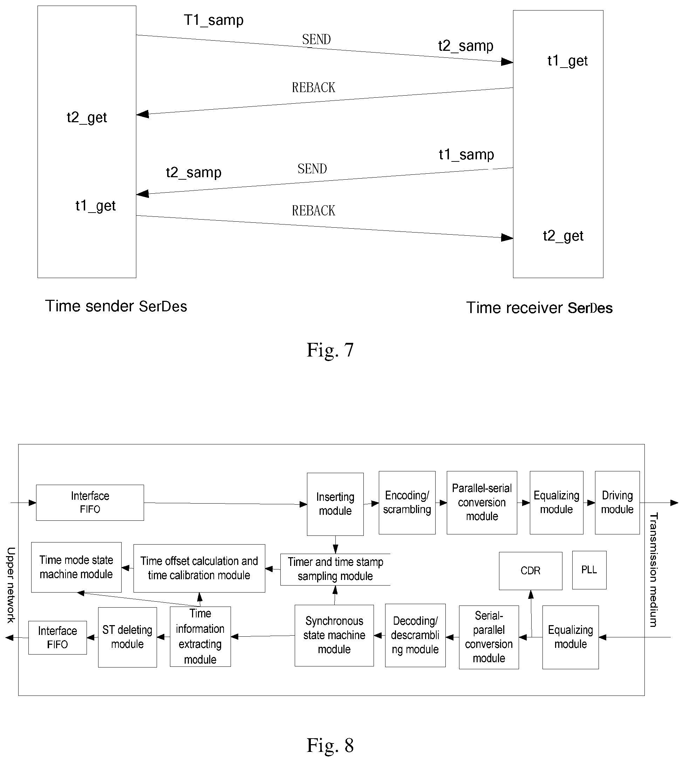

As shown in Fig. 8, the main composition of a SerDes may be divided into four parts, that is, Phase Lock Loop (PLL), a sending module Serializer, a receiving module Deserializer, and a Clock Data Recovery (CDR) module.

The PLL generates a clock signal required by each module of the SerDes, and manages a phase relationship of these clocks.

The Serializer receives, through interface FIFO, a service data parallel signal sent from a network upper interface, and sends it to the 8B and 10B encoder or scrambler, so as to avoid data including extremely long and consecutive 0 or 1. After that, the signal is sent to the Serializer for Parallel-serial conversion. Serial data is processed by an equalizer and sent to the transmission medium by the driver.

The Deserializer receives an external serial signal from the transmission medium, and the equalizer adjusts the signal to remove part of the deterministic jitter. The Deserializer performs Serial-parallel conversion to convert the signal to the parallel signal. A 8B and 10B decoder or descrambler completes decoding or descrambling.

The signal is sent to the network upper interface through interface FIFO.

The CDR module extracts a clock from edge information of receiving data serial bit stream to realize clock synchronization.

The above structure does not have the function of time synchronization. In order to realize a technology of achieving, through the ST, high-precision time synchronization between the network devices at the serial interface SerDes of the network device, the following processing procedure is involved.
1) A process of inserting the ST.
   After interface FIFO of the Serializer, and before the encoder or scrambler, the ST is inserted into a service data stream according to periods. Each ST has 2 bytes, and each ST group has 9 STs. The STs are inserted circularly according to the first type of ST group [S1T1, S2T2, S3T3, S4T4, S5T5, S6T6, S7T7, S8T8, S9T9], and the second type of ST group [S1T1, S2T2, S3T3, S4T4, S5T5, S6T6, S7T7, S8T8, S9T9]. The STs are inserted in the order of S bytes, then T bytes, from bit 0 to bit 7 in bytes. The spacing between the STs inserted is configurable, but the two ends performing time synchronization need to keep consistent. The different insertion cycles determine the proportion of the ST to the total SerDes bandwidth. As mentioned above, the timing byte T1 carries the time synchronization related information of the network device, and T2-T9 carry the time values (the starting time or time stamp). The ST group may or may not carry the time value, as indicated by the bit [1:0] of T1. Thus, a time synchronization cycle may be different from the insertion cycle of the ST group, and the time synchronization cycle may be configured.
2) A synchronous state machine of the synchronous byte. As shown in Fig. 8, it is determined by using a synchronous state machine module.

The synchronous state machine includes a synchronization process and an asynchronization process of the synchronization byte, and a jump between two states.

The synchronization process is that: during the asynchronization state, after the decoder or descrambler of the Deserializer and before the interface FIFO, S1 of the first type of ST group or S1 of the second type of ST group is searched in the data stream, as mentioned above, the two are inverted according to bits. After the S1 is located, S2, S3, S4, S5, S6, S7, S8 and S9 of the group are searched according to the insertion spacing of the ST. If 9 synchronization bytes form a first type of ST group, then the next second type of ST group is searched. If 9 synchronization bytes form a second type of ST group, then the next first type of ST group is searched. When the consecutive first type of ST group and second type of ST group are searched, the synchronous state is entered. During the synchronization state, the locating of the ST group in the data stream is continued according to the insertion spacing of the ST.

The asynchronization process is that: during synchronization, the synchronization byte (S) is located according to the insertion spacing, and if 9 consecutive synchronization bytes do not match, the asynchronous state is entered. The synchronization process is resumed after asynchronization.

3) A timer and time stamp sampling process.

The timer may provide 64 bits of time information, which has the same format as the time value, in ns. The value represents the difference relative to the starting time, and is the relative time. The time issuer uses a local clock to time, and the time receiver uses a synchronous clock output by the CDR module to time.

In the process of inserting the ST into the data stream of the Serializer, when the bit 0 of the S1 is inserted, a sampling timer obtains a sending time stamp, which is the relative time.

In the process of synchronization of the data stream of the Deserializer, during the synchronization state, when the bit 0 of the S1 is located, the sampling timer obtains a receiving time stamp, which is the relative time. The time stamp is not sampled during asynchronization.

4) A process of extracting the time information.

In the process of synchronization of the data stream of the Deserializer, during the synchronization state, the timing bytes T1, T2, T3, T4, T5, T6, T7, T8 and T9 are extracted from each located ST. If any synchronization bytes (S) in the ST group do not match, the 9 timing bytes in this group are discarded. The time information is extracted from the T1 of the valid ST group according to the meaning of bits mentioned above and sent to a time mode state machine, and the time values are extracted from T2-T9.

5) A process of time offset calculation and time calibration.

The network device SerDes may obtain four time stamps:
the sending time stamp (t1_samp) when the S1 is sent in the local port Serializer direction;
the receiving time stamp (t2_samp) when the S1 is received in the local port Deserializer direction;
the time stamp (t1_get) about the category extracted from the ST is sending that is transmitted from the peer device; and
the time stamp (t2_get) about the category extracted from the ST is feedback that is transmitted from the peer device.

The offset is calculated by using the time stamp as [(t2_SAMP-t1_GET)-t2_GET-t1_SAMP)], 2. If the port mode is the time receiver, the network device calibrates the time value of the timer. If the port mode is the time issuer, the network device does not calibrate the time value.

6) A time mode state machine.

The time quality level, the port mode, the starting time and other information of the network device are maintained. The network device performs time information interaction through the sending and receiving of the timing byte (T) between the SerDes, including the time quality level, the port mode, the starting time, etc., and realizes the switch of the port modes.

The network device in an initial state actively sends its own time quality level and other information to the peer, and the device with higher time quality level is preferred as the time issuer, and the device with lower time quality level serves as the time receiver.

Through the ST, the time issuer transmits the starting time to the time receiver, and the time receiver sets its own starting time to be the same as the time issuer.

When the port needs to know the time information of the peer, it sends a query request to the peer, that is, sets the bit [4:2] of the T1 to 2. After receiving the query request, the port of the network device sends its own time quality level, port mode, starting time and other information to the peer.

When the time information of the network device is updated, it sends an update request to the peer, that is sets the bit [4:2] of the T1 to 3. After receiving the update request, the port of the network device sends a query request to the peer, and automatically updates its own port mode after obtaining the time information of the peer.

Third, as shown in Fig. 7, a time synchronization interaction process of the network device SerDes includes the following steps.

The first step is the process of inserting the ST at a sending side. When S1 is inserted, the sending time stamp t1_samp is recorded. The time stamp category of the bit [1:0] of the T1 is set as sending, the bit [7:2] may carry the time information, and the T2-T9 carry the time stamp value t1_samp.

The second step is a synchronization process at a receiving side. When the S1 is located, the receiving time stamp is recorded. If the time stamp category in the T1 is sending, the time stamp is the receiving time stamp t2_samp.

The third step is a process of extracting the time information at the receiving side. The time stamp t1_get is extracted from the T2-T9 of the ST group the T1 time stamp category of which is sending.

The fourth step is that the receiving time stamp t2_samp is transmitted back to the peer through the ST. The time stamp category of the bit [1:0] of the inserted T1 is set as feedback. The bit [7:2] may carry the time information. The T2~T9 carry the time stamp value T2_samp.

The fifth step is a process of extracting the time information at the receiving side. The time stamp t2_get is extracted from the T2~T9 of the ST group the T1 time stamp category of which is feedback.

The time issuer and the time receiver perform the first step to the fifth step simultaneously, and obtain four time stamps respectively to calculate the time offset. The two ends performing time synchronization obtain time offset data at the same time, and when the port mode changes, they can switch fast.

As shown in Fig. 8, the SerDes provided in the embodiments of the invention may include:
a PLL module, a sending module Serializer, a receiving module Deserializer, and a CDR module. The SerDes may further include:
an ST inserting module, configured to insert the ST;
a synchronous state machine module, configured to determine the synchronous state;
an ST deleting module, configured to delete the ST in the received signal;
a timer and time stamp sampling module, configured for timing and obtain the time information;
a time information extracting module, configured to extract the time information from the signal;
a time offset calculation and time calibration module, configured to perform time offset calculation and synchronous calibration;
a time mode state machine module, configured to maintain the time quality level, the port mode, the starting time and other information of the network device;
a synchronous state machine module, configured to locate the ST from the signal, maintain the synchronization process and asynchronization process of the synchronization byte (S), and jump between two states;
an equalizing module, configured to pre-emphasize or equalize the signal, reduce an intersymbol interference and improve the signal transmission reliability; and
a driving module, configured to send the serial signal to and receive the signal from the transmission medium.

As an embodiment of the device of the invention, the structure of modules of the SerDes is shown in Fig. 8.

As an embodiment of the device of the invention, the time synchronization process of the network device SerDes is shown in Fig. 7, including the following steps.

At the first step, parameters are configured.

The first type of ST group is S1=8'hC1, S2=8'h68, S3=8'h21, S4=8'h3E, S5=8'h97, S6=8'hDE, S7=8'hC1, S8=8'h68, S9=8'h21.

The second type of ST group is S1=8'h3E, S2=8'h97, S3=8'hDE, S4=8'hC1, S5=8'h68, S6=8'h21, S7=8'h3E, S8=8'h97, S9=8'hDE.

The insertion spacing of the ST is set to 262144 bits.

The time synchronization cycle is set to 4 times per second.

The time quality level of the network device 1 is 1, and the starting time is set to 64 'h0000_1000_0000_0000.

The time quality level of the network device 2 is 2.

At the second step, the network device 1 sends its own time quality level (T1=8'b00100011) to the peer, and the network device 2 sends its own time quality level (T1=8'b01000011) to the peer. After receiving the time quality level of the peer, the network device 1 sets the port mode as the time issuer, and the network device 2 sets the port mode as the time receiver. The network device 1 sends the starting time (T1=8'h00100101, T2~T9=64'h0000_1000_0000_0000) to the peer; the network device 2 sets its own starting time to the same value after receiving the starting time of the peer.

At the third step, the network device SerDes of the time issuer sends data bits and inserts 16 bits of ST every 262128 bits of service data, and inserts the first type of ST group and the second type of ST group circularly. When the S1 is inserted, the sending time stamp t1_samp is recorded. The port mode is the time issuer, and the time stamp category is sending, that is, T1=8'b00100101. T2-T9 are equal to the time stamp value t1_samp.

At the fourth step, the network device SerDes of the time issuer searches the ST for synchronization, locates the ST group, and records the receiving time stamp t2_samp if the time stamp category of T1 is sending. t2_samp is transmitted back by the next ST group. The port mode of T1 is the time issuer, and the time stamp category is feedback, that is, T1=8'b00100110. T2-T9 are equal to the time stamp value t2_samp.

At the fifth step, the network device SerDes of the time issuer extracts the time stamp t1_get (that is, the value of t1_get is equal to the t1_samp of the peer) from the ST group the received time stamp category of which is sending, and extracts the time stamp t2_get (that is, the value of t2_get is equal to the t2_samp of the peer) from the ST group the received time stamp category of which is feedback.

At the sixth step, the network device SerDes of the time receiver sends data bits, inserts the first type of ST group and the second type of ST group circularly according to the inserting spacing, and records the sending time stamp t1_samp when inserting the S1. The port mode is the time receiver, and the time stamp category is sending, that is, T1=8'b01000101. T2~T9 are equal to the time stamp value t1_samp.

At the seventh step, the network device SerDes of the time receiver searches the ST for synchronization, locates the ST group, and records the receiving time stamp t2_samp if the time stamp category of T1 is sending. t2_samp is transmitted back by the next ST group. The port mode of T1 is the time receiver, and the time stamp category is feedback, that is, T1=8'b01000110. T2~T9 are equal to the time stamp value t2_samp.

At the eighth step, the network device SerDes of the time receiver extracts the time stamp t1_get from the ST group the received time stamp category of which is sending, and extracts the time stamp t2_get from the ST group the received time stamp category of which is feedback.

At the ninth step, the calibration is performed four times per second according to the time synchronization cycle. The network device of the time receiver calculates the time offset=[(T2_SAMP-T1_GET)-T2_GET-T1_SAMP)], 2, and calibrates the time of the device. The network device of the time issuer calculates the time offset=[(t2_samp-t1_get)-t2_get-t1_samp)], 2, and calibrates the time of the device.

In several embodiments provided by the application, it should be understood that the disclosed device and method may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms. The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the invention may be integrated into a processing module, each unit may also serve as an independent unit and two or more than two units may also be integrated into a unit. The integrated unit may be implemented in a hardware form and may also be implemented in form of hardware and software functional unit.

Those of ordinary skill in the art should know that all or part of the steps of the method embodiment may be implemented by related hardware instructed through a program, the program may be stored in a computer-readable storage medium, and the program is executed to execute the steps of the method embodiment. The storage medium includes: various media capable of storing program codes such as a mobile storage device, a Read-Only Memory (ROM), a Random Access Memory (RAM), a magnetic disk or a compact disc.

The above is only the specific implementation modes of the invention and not intended to limit the protection scope of the invention. So, the protection scope of the invention is subject to the protection scope of the claims.

## Claims

1. A time synchronization method, applied to a first network device, comprising:
inserting, at a physical layer, a Synchronization Timing block, ST, into a signal to be
sent, wherein the signal to be sent is a bit sequence to be sent, the ST comprises a synchronization byte and a timing byte, the synchronization byte is used for positioning the ST, and the timing byte is used for carrying synchronization information for a second network device to perform time synchronization; and
sending the signal to be sent, in which the ST is inserted, to a second network device.

2. The method according to claim 1, wherein inserting, at the physical layer, the ST into the signal to be sent comprises:
inserting the ST into a parallel signal at the physical layer, wherein the ST comprises the synchronization byte used for positioning and the timing byte used for carrying the synchronization information for the second network device to perform the time synchronization;
the method further comprises:
converting the parallel signal in which the ST is inserted into a serial signal;
sending the signal to be sent in which the ST is inserted comprises:
sending the serial signal.

3. The method according to claim 2, wherein inserting, at the physical layer the ST into the signal to be sent comprises:
inserting, at the physical layer, the ST carrying first time information, which indicates a time stamp at which the ST is sent by the first network device, into the parallel signal; and
after receiving an ST carrying second time information which is sent by the second network device, inserting, through the ST, third time information indicating a time stamp at which the ST carrying the second time information is received by the first network device, into the parallel signal to be sent to the second network device;
wherein the first time information, the second time information, the third time information and fourth time information indicating a time stamp at which the ST carrying the third time information is received by the second network device are jointly used for the second network device to calculate a time offset between the second network device and the first network device,
wherein the second time information indicates a time stamp at which the ST carrying the first time information is received by the second network device.

4. The method according to claim 1 or 2, N STs form an ST group, N being an integer not less than 2, wherein the timing byte T1 in the first synchronization timing block S1T1 is used for carrying one of the following information:
a time parameter indicator, used for indicating the purpose of the time information carried by the timing byte Tn in the current ST group, wherein the value of n is 2 to N;
an information type indicator, used for indicating an information type carried by the timing byte Tn in the current ST group;
an insertion interval indicator, used for indicating interval bits and/or interval bytes between the synchronization byte S and the timing byte T in one ST; and
an indication content field, used for carrying detailed information corresponding to the information type.

5. The method according to claim 4, wherein the time parameter indicator comprises at least one of the following:
a starting time indicator, used for indicating the starting time of the time synchronization;
a sending time indicator, used for indicating the time of sending the S1T1;
a receiving time indicator, used for indicating the receiving time of a peer device based on the S1T1; and
a blank indicator, used for indicating that the Tn does not carry the time information.

6. The method according to claim 4, wherein the information type indicator comprises at least one of the following:
a time quality level;
synchronization modes, comprising a first mode, a second mode and a third mode, wherein when a port mode of a device is the first mode, it represents that the device does not participate in the time synchronization, when the port mode of the device is the second mode, it represents that the device is a time issuer that provides the time information, and when the port mode of the device is the third mode, it represents that the device is a time receiver that receives the time information;
a query request, used for requesting a query for a peer device to provide the synchronization information; and
an update request, used for providing an update of the synchronization information to the peer device.

7. The method according to claim 4, when the ST group comprises an odd number of STs, the ST group comprises: a first type of ST group and a second type of ST group; wherein the synchronization byte in the first type of ST group has an opposite value to that in the second type of ST group; the first type of ST group and the second type of ST group are inserted into the bit sequence to be sent at intervals; and/or,
y STs distributed adjacently in the ST group are an ST subgroup; and the synchronization bytes of two adjacent synchronization block subgroups have opposite values.

8. A time synchronization method, applied to a second network device, comprising:
receiving a signal sent by a first network device;
extracting, at a physical layer, a Synchronization Timing block, ST, from the
received signal by matching a local synchronization byte with the received signal, and obtaining synchronization information carried by a timing byte in the ST, wherein the received signal is a bit sequence, the ST comprises a synchronization byte and the timing byte, the synchronization byte is used for positioning the ST, and the timing byte is used for carrying synchronization information for the second network device to perform time synchronization; and
performing time synchronization with the first network device based on the synchronization information.

9. The method according to claim 8, wherein receiving the signal sent by the first network device comprises:
receiving a serial signal sent by the first network device;
the method further comprises:
converting the serial signal into a parallel signal;
extracting, at the physical layer, the ST from the received signal by matching the local synchronization byte with the received signal, and obtaining the synchronization information carried by the timing byte in the ST comprises:
extracting, at the physical layer, the ST from the parallel signal by matching the local synchronization byte with the parallel signal, and obtaining the synchronization information carried by the timing byte in the ST.

10. The method according to claim 8 or 9, wherein extracting, at the physical layer, the ST from the received signal by matching the local synchronization byte with the received signal, and obtaining the synchronization information carried by the timing byte in the ST comprises:
by matching the local synchronization byte with the received signal, extracting, at the physical layer, first time information, which indicates a time stamp at which the ST is sent by the first network device, from the timing byte in the ST, which is successfully matched with the local synchronization byte;
the method further comprises:
recording second time information indicating a time stamp at which the ST carrying the first time information is received by the second network device;
inserting, at the physical layer, the ST carrying the second time information into a signal to be sent to the first network device;
receiving a signal, inserted with the ST carrying third time information, sent by the first network device, wherein the third time information indicates a time stamp at which the ST carrying the second time information is received by the first network device;
recording fourth time information which indicates a time stamp at which the ST carrying the third time information is received;
calculating a time offset from the first network device based on the first time information, the second time information, the third time information and the fourth time information; and
calibrating the time of the second network device according to the time offset.

11. The method according to claim 9, further comprising:
determining a synchronization condition with the first network device according to a receiving condition of the ST; wherein the synchronization condition comprises: a synchronous state in sync with the first network device, and/or an asynchronous state out of sync with the first network device.

12. A network device, which is a first network device, comprising:
an inserting module, configured to insert, at a physical layer, a Synchronization Timing block, ST, into a signal to be sent, wherein the signal to be sent is a bit sequence to be sent, and the ST comprises: a synchronization byte used for positioning the ST and a timing byte used for carrying synchronization information for a second network device to perform time synchronization; and
a sending module, configured to send the signal to be sent, in which the ST is inserted, to a second network device.

13. A network device, which is a second network device, comprising:
a receiving module, configured to receive a signal sent by a first network device; an extracting module, configured to extract, at a physical layer, a Synchronization Timing block, ST, from the received signal by matching a local synchronization byte with the received signal, and obtain synchronization information carried by a timing byte in the ST, wherein the received signal is a bit sequence, the ST comprises a synchronization byte and the timing byte, the synchronization byte is used for positioning the ST, and the timing byte is used for carrying synchronization information for the second network device to perform time synchronization; and
a synchronizing module, configured to perform time synchronization with the first network device based on the synchronization information.

14. The network device according to claim 12, further comprising:
an interface, configured to receive a parallel signal according to First In First Out, FIFO, wherein the inserting module is connected with the interface and configured to insert the ST into the parallel signal at the physical layer, and the parallel signal is the bit sequence;
a Serial-parallel converter, connected with the inserting module and configured to convert the parallel signal in which the ST is inserted to a serial signal to be sent to the second network device by the sending module;
a timer, configured for timing; and
a collecting module, connected with the timer and configured to collect time information of the timer; wherein the time information is a component of the synchronization information.

15. The network device according to claim 13, wherein the receiving module is configured to receive a serial signal from a transmission medium, and
the network device further comprising:
a Serial-parallel converter configured to convert the serial signal to the parallel signal, wherein the parallel signal is the bit sequence, and the extracting module is configured to extract, at the physical layer, the ST from the parallel signal by matching the local synchronization byte with the parallel signal, and obtain the synchronization information carried by the timing byte in the ST;
a calculating module, connected with the extracting module and configured to calculate a time offset based on the synchronization information; and
a timer connected with the calculating module and configured to calibrate its own time value according to the time offset.

## Patentansprüche

1. Zeitsynchronisationsverfahren, das auf eine erste Netzwerkvorrichtung angewendet wird, umfassend:
Einfügen, auf einer physikalischen Schicht, einen
Synchronisationszeitsteuerungsblock, ST, in ein zu sendendes Signal, wobei das zu sendende Signal eine zu sendende Bitsequenz ist, der ST ein Synchronisationsbyte und ein Zeitsteuerungsbyte umfasst, das Synchronisationsbyte zur Positionierung des ST verwendet wird und das Zeitsteuerungsbyte zum Tragen von Synchronisationsinformationen für eine zweite Netzwerkvorrichtung zum Durchführen von Zeitsynchronisation verwendet wird; und
Senden des zu sendenden Signals, in das der ST eingefügt ist, an eine zweite Netzwerkvorrichtung.

2. Verfahren nach Anspruch 1, wobei das Einfügen, auf der physikalischen Schicht, des ST in das zu sendende Signal umfasst:
Einfügen des ST in ein paralleles Signal auf der physikalischen Schicht, wobei der ST das Synchronisationsbyte, das zur Positionierung verwendet wird, und das Zeitsteuerungsbyte, das zum Tragen der
Synchronisationsinformationen für die zweite Netzwerkvorrichtung zum Durchführen der Zeitsynchronisation verwendet wird, umfasst;
wobei das Verfahren ferner umfasst:
Umwandeln des parallelen Signals, in das der ST eingefügt ist, in ein serielles Signal;
wobei das Senden des zu sendenden Signals, in das der ST eingefügt ist,
umfasst:
Senden des seriellen Signals.

3. Verfahren nach Anspruch 2, wobei das Einfügen, auf der physikalischen Schicht, des ST in das zu sendende Signal umfasst:
Einfügen, auf der physikalischen Schicht, des ST, der erste Zeitinformationen trägt, die einen Zeitstempel angeben, zu dem der ST durch die erste Netzwerkvorrichtung gesendet wird, in das parallele Signal; und
nach dem Empfangen eines ST, der zweite Zeitinformationen trägt, die durch die zweite Netzwerkvorrichtung gesendet werden, Einfügen, durch den ST, von dritten Zeitinformationen, die einen Zeitstempel angeben, zu dem der ST, der die zweiten Zeitinformationen trägt, durch die erste Netzwerkvorrichtung empfangen wird, in das parallele Signal, das an die zweite Netzwerkvorrichtung gesendet werden soll; wobei die ersten Zeitinformationen, die zweiten Zeitinformationen, die dritten Zeitinformationen und vierten Zeitinformationen, die einen Zeitstempel angeben, zu dem der ST, der die dritten Zeitinformationen trägt, durch die zweite Netzwerkvorrichtung empfangen wird, gemeinsam für die zweite Netzwerkvorrichtung zum Berechnen eines Zeitversatzes zwischen der zweiten Netzwerkvorrichtung und der ersten Netzwerkvorrichtung verwendet werden,
wobei die zweiten Zeitinformationen einen Zeitstempel angeben, zu dem der ST, der die ersten Zeitinformationen trägt, durch die zweite Netzwerkvorrichtung empfangen wird.

4. Verfahren nach Anspruch 1 oder 2, wobei N STs eine ST-Gruppe bilden, wobei N eine ganze Zahl nicht kleiner als 2 ist, wobei das Zeitsteuerungsbyte T1 in dem ersten Synchronisationszeitsteuerungsblock S1T1 zum Tragen einer der folgenden Informationen verwendet wird:
eines Zeitparameterindikators, der zum Angeben des Zwecks der Zeitinformationen verwendet wird, die durch das Zeitsteuerungsbyte Tn in der aktuellen ST-Gruppe getragen werden, wobei der Wert von n 2 bis N ist;
eines Informationstypindikators, der zum Angeben eines Informationstyps verwendet wird, der durch das Zeitsteuerungsbyte Tn in der aktuellen ST-Gruppe getragen wird;
eines Einfügungsintervallindikators, der zum Angeben von Intervallbits und/oder Intervallbytes zwischen dem Synchronisationsbyte S und dem Zeitsteuerungsbyte T in einem ST verwendet wird; und
eines Angabeinhaltsfelds, das zum Tragen detaillierter Informationen verwendet wird, die dem Informationstyp entsprechen.

5. Verfahren nach Anspruch 4, wobei der Zeitparameterindikator mindestens eines der Folgenden umfasst:
einen Startzeitindikator, der zum Angeben der Startzeit der Zeitsynchronisation verwendet wird;
einen Sendezeitindikator, der zum Angeben der Zeit des Sendens des S1T1 verwendet wird;
einen Empfangszeitindikator, der zum Angeben der Empfangszeit einer Peer-Vorrichtung auf der Basis des S1T1 verwendet wird; und
einen Leerindikator, der zum Angeben verwendet wird, dass das Tn die Zeitinformationen nicht trägt.

6. Verfahren nach Anspruch 4, wobei der Informationstypindikator mindestens eines der Folgenden umfasst:
einen Zeitqualitätsstufe;
Synchronisationsmodi, die einen ersten Modus, einen zweiten Modus und
einen dritten Modus umfassen, wobei, wenn ein Anschlussmodus einer Vorrichtung der erste Modus ist, dies darstellt, dass die Vorrichtung nicht an der Zeitsynchronisation teilnimmt, wenn der Anschlussmodus der Vorrichtung der zweite Modus ist, dies darstellt, dass die Vorrichtung ein Zeitausgeber ist,
der die Zeitinformationen bereitstellt, und wenn der Anschlussmodus der Vorrichtung der dritte Modus ist, dies darstellt, dass die Vorrichtung ein Zeitempfänger ist, der die Zeitinformationen empfängt;
eine Abfrageanforderung, die zum Anfordern einer Abfrage für eine Peer-Vorrichtung zum Bereitstellen der Synchronisationsinformationen verwendet wird; und
eine Aktualisierungsanforderung, die zum Bereitstellen einer Aktualisierung der Synchronisationsinformationen für die Peer-Vorrichtung verwendet wird.

7. Verfahren nach Anspruch 4, wobei, wenn die ST-Gruppe eine ungerade Anzahl von STs umfasst, die ST-Gruppe umfasst: einen ersten Typ von ST-Gruppe und einen zweiten Typ von ST-Gruppe; wobei das Synchronisationsbyte in dem ersten Typ von ST-Gruppe einen entgegengesetzten Wert zu dem in dem zweiten Typ von ST-Gruppe aufweist; der erste Typ von ST-Gruppe und der zweite Typ von ST-Gruppe in Intervallen in die zu sendende Bitsequenz eingefügt werden;
und/oder
y STs, die benachbart in der ST-Gruppe verteilt sind, eine ST-Untergruppe sind; und die Synchronisationsbytes von zwei benachbarten Synchronisationsblock-Untergruppen entgegengesetzte Werte aufweisen.

8. Zeitsynchronisationsverfahren, das auf eine zweite Netzwerkvorrichtung angewendet wird, umfassend:
Empfangen eines Signals, das durch eine erste Netzwerkvorrichtung gesendet wird;
Extrahieren, auf einer physikalischen Schicht, einen
Synchronisationszeitsteuerungsblock, ST, aus dem empfangenen Signal durch Übereinstimmen eines lokalen Synchronisationsbytes mit dem empfangenen Signal und Erhalten von Synchronisationsinformationen, die durch ein Zeitsteuerungsbyte in dem ST getragen werden, wobei das empfangene Signal eine Bitsequenz ist, der ST ein Synchronisationsbyte und das Zeitsteuerungsbyte umfasst, das Synchronisationsbyte zur Positionierung des ST verwendet wird und das Zeitsteuerungsbyte zum Tragen von Synchronisationsinformationen für die zweite Netzwerkvorrichtung zum Durchführen von Zeitsynchronisation verwendet wird; und
Durchführen von Zeitsynchronisation mit der ersten Netzwerkvorrichtung auf der Basis der Synchronisationsinformationen.

9. Verfahren nach Anspruch 8, wobei das Empfangen des Signals, das durch die erste Netzwerkvorrichtung gesendet wird, umfasst:
Empfangen eines seriellen Signals, das durch die erste Netzwerkvorrichtung gesendet wird;
wobei das Verfahren ferner umfasst:
Umwandeln des seriellen Signals in ein paralleles Signal;
Extrahieren, auf der physikalischen Schicht, des ST aus dem empfangenen Signal durch Übereinstimmen des lokalen Synchronisationsbytes mit dem empfangenen Signal und das Erhalten der Synchronisationsinformationen, die durch das Zeitsteuerungsbyte in dem ST getragen werden, umfasst:
Extrahieren, auf der physikalischen Schicht, des ST aus dem parallelen Signal durch Übereinstimmen des lokalen Synchronisationsbytes mit dem parallelen Signal und Erhalten der Synchronisationsinformationen, die durch das Zeitsteuerungsbyte in dem ST getragen werden.

10. Verfahren nach Anspruch 8 oder 9, wobei das Extrahieren, auf der physikalischen Schicht, des ST aus dem empfangenen Signal durch Übereinstimmen des lokalen Synchronisationsbytes mit dem empfangenen Signal und das Erhalten der Synchronisationsinformationen, die durch das Zeitsteuerungsbyte in dem ST getragen werden, umfasst:
durch Übereinstimmen des lokalen Synchronisationsbytes mit dem empfangenen Signal, Extrahieren, auf der physikalischen Schicht, von ersten Zeitinformationen, die einen Zeitstempel angeben, zu dem der ST durch die erste Netzwerkvorrichtung gesendet wird, aus dem Zeitsteuerungsbyte in dem ST, das erfolgreich mit dem lokalen Synchronisationsbyte übereinstimmt;
wobei das Verfahren ferner umfasst:
Aufzeichnen von zweiten Zeitinformationen, die einen Zeitstempel angeben, zu dem der ST, der die ersten Zeitinformationen trägt, durch die zweite Netzwerkvorrichtung empfangen wird;
Einfügen, auf der physikalischen Schicht, des ST, der die zweiten Zeitinformationen trägt, in ein Signal, das an die erste Netzwerkvorrichtung gesendet werden soll;
Empfangen eines Signals, das mit dem ST, der dritte Zeitinformationen trägt, eingefügt ist, das durch die erste Netzwerkvorrichtung gesendet wird, wobei die dritten Zeitinformationen einen Zeitstempel angeben, zu dem der ST, der die zweiten Zeitinformationen trägt, durch die erste Netzwerkvorrichtung empfangen wird;
Aufzeichnen von vierten Zeitinformationen, die einen Zeitstempel angeben, zu dem der ST, der die dritten Zeitinformationen trägt, empfangen wird; Berechnen eines Zeitversatzes von der ersten Netzwerkvorrichtung auf der Basis der ersten Zeitinformationen, der zweiten Zeitinformationen, der dritten Zeitinformationen und der vierten Zeitinformationen; und
Kalibrieren der Zeit der zweiten Netzwerkvorrichtung gemäß dem Zeitversatz.

11. Verfahren nach Anspruch 9, ferner umfassend:
Bestimmen einer Synchronisierungsbedingung mit der ersten Netzwerkvorrichtung gemäß einer Empfangsbedingung des ST; wobei die Synchronisierungsbedingung Folgendes umfasst: einen synchronen Zustand synchron mit der ersten Netzwerkvorrichtung und/oder einen asynchronen Zustand nicht synchron mit der ersten Netzwerkvorrichtung.

12. Netzwerkvorrichtung, die eine erste Netzwerkvorrichtung ist, umfassend:
ein Einfügungsmodul, konfiguriert zum Einfügen, auf einer physikalischen Schicht, einen Synchronisationszeitsteuerungsblock, ST, in ein zu sendendes Signal, wobei das zu sendende Signal eine zu sendende Bitsequenz ist und der ST Folgendes umfasst: ein Synchronisationsbyte, das zur Positionierung des ST verwendet wird, und ein Zeitsteuerungsbyte, das zum Tragen von Synchronisationsinformationen für eine zweite Netzwerkvorrichtung zum Durchführen von Zeitsynchronisation verwendet wird; und
ein Sendemodul, konfiguriert zum Senden des zu sendenden Signals, in das der ST eingefügt ist, an eine zweite Netzwerkvorrichtung.

13. Netzwerkvorrichtung, die eine zweite Netzwerkvorrichtung ist, umfassend:
ein Empfangsmodul, konfiguriert zum Empfangen eines Signals, das durch eine erste Netzwerkvorrichtung gesendet wird;
ein Extraktionsmodul, konfiguriert zum Extrahieren, auf einer physikalischen Schicht, einen Synchronisationszeitsteuerungsblock, ST, aus dem empfangenen Signal durch Übereinstimmen eines lokalen Synchronisationsbytes mit dem empfangenen Signal und Erhalten von Synchronisationsinformationen, die durch ein Zeitsteuerungsbyte in dem ST getragen werden, wobei das empfangene Signal eine Bitsequenz ist, der ST ein Synchronisationsbyte und das Zeitsteuerungsbyte umfasst, das Synchronisationsbyte zur Positionierung des ST verwendet wird und das Zeitsteuerungsbyte zum Tragen von Synchronisationsinformationen für die zweite Netzwerkvorrichtung zum Durchführen von Zeitsynchronisation verwendet wird; und
ein Synchronisationsmodul, konfiguriert zum Durchführen von Zeitsynchronisation mit der ersten Netzwerkvorrichtung auf der Basis der Synchronisationsinformationen.

14. Netzwerkvorrichtung nach Anspruch 12, ferner umfassend:
eine Schnittstelle, konfiguriert zum Empfangen eines Parallelsignals gemäß First In First Out, FIFO, wobei das Einfügungsmodul mit der Schnittstelle verbunden ist und konfiguriert ist zum Einfügen des ST in das Parallelsignal auf der physikalischen Schicht und das Parallelsignal die Bitsequenz ist;
einen Seriell-Parallel-Wandler, verbunden mit dem Einfügungsmodul und konfiguriert zum Umwandeln des parallelen Signals, in das der ST eingefügt ist, in ein serielles Signal, das durch das Sendemodul an die zweite Netzwerkvorrichtung gesendet werden soll;
einen Zeitgeber, konfiguriert zur Zeitsteuerung; und
ein Sammelmodul, verbunden mit dem Zeitgeber und konfiguriert zum Sammeln von Zeitinformationen des Zeitgebers; wobei die Zeitinformationen eine Komponente der Synchronisationsinformationen sind.

15. Netzwerkvorrichtung nach Anspruch 13, wobei das Empfangsmodul konfiguriert ist zum Empfangen eines seriellen Signals von einem Übertragungsmedium, und
wobei die Netzwerkvorrichtung ferner umfasst:
einen Seriell-Parallel-Wandler, konfiguriert zum Umwandeln des seriellen Signals in das parallele Signal, wobei das parallele Signal die Bitsequenz ist und das Extraktionsmodul konfiguriert ist zum Extrahieren, auf der physikalischen Schicht, des ST aus dem parallelen Signal durch Übereinstimmen des lokalen Synchronisationsbytes mit dem parallelen Signal und Erhalten der Synchronisationsinformationen, die durch das Zeitsteuerungsbyte in dem ST getragen werden;
ein Berechnungsmodul, verbunden mit dem Extraktionsmodul und
konfiguriert zum Berechnen eines Zeitversatzes auf der Basis der Synchronisationsinformationen; und
einen Zeitgeber, verbunden mit dem Berechnungsmodul und konfiguriert zum Kalibrieren seines eigenen Zeitwerts gemäß dem Zeitversatz.

## Revendications

1. Procédé de synchronisation temporelle, appliqué à un premier dispositif de réseau, comprenant :
insérer, au niveau d'une couche physique, un bloc de synchronisation, ST, dans un signal à envoyer, dans lequel le signal à envoyer est une séquence de bits à envoyer, le ST comprend un octet de synchronisation et un octet de synchronisation, l'octet de synchronisation est utilisé pour positionner le ST, et l'octet de synchronisation est utilisé pour transporter des informations de synchronisation pour qu'un second dispositif de réseau réalise une synchronisation temporelle ; et
envoyer le signal à envoyer, dans lequel le ST est inséré, à un second dispositif de réseau.

2. Procédé selon la revendication 1, dans lequel insérer, au niveau de la couche physique, le ST dans le signal à envoyer comprend :
insérer le ST dans un signal parallèle au niveau de la couche physique, dans lequel le ST comprend l'octet de synchronisation utilisé pour le positionnement et l'octet de synchronisation utilisé pour transporter les informations de synchronisation pour que le second dispositif de réseau réalise la synchronisation temporelle ;
le procédé comprend en outre :
convertir le signal parallèle dans lequel le ST est inséré en un signal sériel ;
envoyer le signal à envoyer dans lequel le ST est inséré comprend :
envoyer le signal sériel.

3. Procédé selon la revendication 2, dans lequel insérer, au niveau de la couche physique, le ST dans le signal à envoyer comprend :
insérer, au niveau de la couche physique, le ST transportant des premières informations temporelles, qui indiquent une estampille temporelle à laquelle le ST est envoyé par le premier dispositif de réseau, dans le signal parallèle ; et
après avoir reçu un ST transportant des deuxièmes informations temporelles qui sont envoyées par le second dispositif de réseau, insérer, par l'intermédiaire du ST, des troisièmes informations temporelles indiquant une estampille temporelle à laquelle le ST transportant les deuxièmes informations temporelles est reçu par le premier dispositif de réseau, dans le signal parallèle à envoyer au second dispositif de réseau ; dans lequel les premières informations temporelles, les deuxièmes informations temporelles, les troisièmes informations temporelles et des quatrièmes informations temporelles indiquant une estampille temporelle à laquelle le ST transportant les troisièmes informations temporelles est reçu par le second dispositif de réseau sont utilisées conjointement pour que le second dispositif de réseau calcule un décalage temporel entre le second dispositif de réseau et le premier dispositif de réseau,
dans lequel les deuxièmes informations temporelles indiquent une estampille temporelle à laquelle le ST transportant les premières informations temporelles est reçu par le second dispositif de réseau.

4. Procédé selon la revendication 1 ou 2, dans lequel N ST forment un groupe de ST, N étant un entier non inférieur à 2, dans lequel l'octet de synchronisation T1 dans le premier bloc de synchronisation S1T1 est utilisé pour transporter l'une des informations suivantes :
un indicateur de paramètre temporel, utilisé pour indiquer le but des informations temporelles transportées par l'octet de synchronisation Tn dans le groupe de ST actuel, dans lequel la valeur de n est de 2 à N ;
un indicateur de type d'informations, utilisé pour indiquer un type d'informations transporté par l'octet de synchronisation Tn dans le groupe de ST actuel ;
un indicateur d'intervalle d'insertion, utilisé pour indiquer des bits d'intervalle et/ou des octets d'intervalle entre l'octet de synchronisation S et l'octet de synchronisation T dans un ST ; et
un champ de contenu d'indication, utilisé pour transporter des informations détaillées correspondant au type d'informations.

5. Procédé selon la revendication 4, dans lequel l'indicateur de paramètre temporel comprend au moins l'un des éléments suivants :
un indicateur de temps de démarrage, utilisé pour indiquer le temps de démarrage de la synchronisation temporelle ;
un indicateur de temps d'envoi, utilisé pour indiquer le temps d'envoi du S1T1 ;
un indicateur de temps de réception, utilisé pour indiquer le temps de réception d'un dispositif homologue sur la base du S1T1 ; et
un indicateur de vide, utilisé pour indiquer que le Tn ne transporte pas les informations temporelles.

6. Procédé selon la revendication 4, dans lequel l'indicateur de type d'informations comprend au moins l'un des éléments suivants :
un niveau de qualité temporelle ;
des modes de synchronisation, comprenant un premier mode, un deuxième mode et un troisième mode, dans lequel, lorsqu'un mode de port d'un dispositif est le premier mode, il représente que le dispositif ne participe pas à la synchronisation temporelle, lorsque le mode de port du dispositif est le deuxième mode, il représente que le dispositif est un émetteur de temps qui fournit les informations temporelles, et lorsque le mode de port du dispositif est le troisième mode, il représente que le dispositif est un récepteur de temps qui reçoit les informations temporelles ;
une demande d'interrogation, utilisée pour demander une interrogation pour qu'un dispositif homologue fournisse les informations de synchronisation ; et
une demande de mise à jour, utilisée pour fournir une mise à jour des informations de synchronisation au dispositif homologue.

7. Procédé selon la revendication 4, lorsque le groupe de ST comprend un nombre impair de ST, le groupe de ST comprend : un premier type de groupe de ST et un second type de groupe de ST ; dans lequel l'octet de synchronisation dans le premier type de groupe de ST a une valeur opposée à celle dans le second type de groupe de ST ; le premier type de groupe de ST et le second type de groupe de ST sont insérés dans la séquence de bits à envoyer à des intervalles ;
et/ou,
y ST distribués de manière adjacente dans le groupe de ST sont un sous-groupe de ST ; et les octets de synchronisation de deux sous-groupes de blocs de synchronisation adjacents ont des valeurs opposées.

8. Procédé de synchronisation temporelle, appliqué à un second dispositif de réseau, comprenant :
recevoir un signal envoyé par un premier dispositif de réseau ;
extraire, au niveau d'une couche physique, un bloc de synchronisation, ST, du signal reçu en faisant correspondre un octet de synchronisation local avec le signal reçu, et obtenir des informations de synchronisation transportées par un octet de synchronisation dans le ST, dans lequel le signal reçu est une séquence de bits, le ST comprend un octet de synchronisation et l'octet de synchronisation, l'octet de synchronisation est utilisé pour positionner le ST, et l'octet de synchronisation est utilisé pour transporter des informations de synchronisation pour que le second dispositif de réseau réalise une synchronisation temporelle ; et
réaliser une synchronisation temporelle avec le premier dispositif de réseau sur la base des informations de synchronisation.

9. Procédé selon la revendication 8, dans lequel recevoir le signal envoyé par le premier dispositif de réseau comprend :
recevoir un signal sériel envoyé par le premier dispositif de réseau ;
le procédé comprend en outre :
convertir le signal sériel en un signal parallèle ;
extraire, au niveau de la couche physique, le ST du signal reçu en faisant correspondre l'octet de synchronisation local avec le signal reçu, et obtenir les informations de synchronisation transportées par l'octet de synchronisation dans le ST comprend :
extraire, au niveau de la couche physique, le ST du signal parallèle en faisant correspondre l'octet de synchronisation local avec le signal parallèle, et
obtenir les informations de synchronisation transportées par l'octet de synchronisation dans le ST.

10. Procédé selon la revendication 8 ou 9, dans lequel extraire, au niveau de la couche physique, le ST du signal reçu en faisant correspondre l'octet de synchronisation local avec le signal reçu, et obtenir les informations de synchronisation transportées par l'octet de synchronisation dans le ST comprend :
en faisant correspondre l'octet de synchronisation local avec le signal reçu, extraire, au niveau de la couche physique, des premières informations temporelles, qui indiquent une estampille temporelle à laquelle le ST est envoyé par le premier dispositif de réseau, de l'octet de synchronisation dans le ST, qui est mis en correspondance avec succès avec l'octet de synchronisation local ;
le procédé comprend en outre :
enregistrer des deuxièmes informations temporelles indiquant une estampille temporelle à laquelle le ST transportant les premières informations temporelles est reçu par le second dispositif de réseau ;
insérer, au niveau de la couche physique, le ST transportant les deuxièmes informations temporelles dans un signal à envoyer au premier dispositif de réseau ;
recevoir un signal, inséré avec le ST transportant des troisièmes informations temporelles, envoyé par le premier dispositif de réseau, dans lequel les troisièmes informations temporelles indiquent une estampille temporelle à laquelle le ST transportant les deuxièmes informations temporelles est reçu par le premier dispositif de réseau ;
enregistrer des quatrièmes informations temporelles qui indiquent une estampille temporelle à laquelle le ST transportant les troisièmes informations temporelles est reçu ;
calculer un décalage temporel à partir du premier dispositif de réseau sur la base des premières informations temporelles, des deuxièmes informations temporelles, des troisièmes informations temporelles et des quatrièmes informations temporelles ; et
calibrer le temps du second dispositif de réseau en fonction du décalage temporel.

11. Procédé selon la revendication 9, comprenant en outre :
déterminer une condition de synchronisation avec le premier dispositif de réseau en fonction d'une condition de réception du ST ; dans lequel la condition de synchronisation comprend : un état synchrone en synchronisation avec le premier dispositif de réseau, et/ou un état asynchrone hors synchronisation avec le premier dispositif de réseau.

12. Dispositif de réseau, qui est un premier dispositif de réseau, comprenant :
un module d'insertion, configuré pour insérer, au niveau d'une couche physique, un bloc de synchronisation, ST, dans un signal à envoyer, dans lequel le signal à envoyer est une séquence de bits à envoyer, et le ST comprend : un octet de synchronisation utilisé pour positionner le ST et un octet de synchronisation utilisé pour transporter des informations de synchronisation pour qu'un second dispositif de réseau réalise une synchronisation temporelle ; et
un module d'envoi, configuré pour envoyer le signal à envoyer, dans lequel le ST est inséré, à un second dispositif de réseau.

13. Dispositif de réseau, qui est un second dispositif de réseau, comprenant :
un module de réception, configuré pour recevoir un signal envoyé par un premier dispositif de réseau ;
un module d'extraction, configuré pour extraire, au niveau d'une couche physique, un bloc de synchronisation, ST, du signal reçu en faisant correspondre un octet de synchronisation local avec le signal reçu, et obtenir des informations de synchronisation transportées par un octet de synchronisation dans le ST, dans lequel le signal reçu est une séquence de bits, le ST comprend un octet de synchronisation et l'octet de synchronisation, l'octet de synchronisation est utilisé pour positionner le ST, et l'octet de synchronisation est utilisé pour transporter des informations de synchronisation pour que le second dispositif de réseau réalise une synchronisation temporelle ; et
un module de synchronisation, configuré pour réaliser une synchronisation temporelle avec le premier dispositif de réseau sur la base des informations de synchronisation.

14. Dispositif de réseau selon la revendication 12, comprenant en outre :
une interface, configurée pour recevoir un signal parallèle selon un premier entré, premier sorti, FIFO, dans lequel le module d'insertion est connecté à l'interface et configuré pour insérer le ST dans le signal parallèle au niveau de la couche physique, et le signal parallèle est la séquence de bits ;
un convertisseur série-parallèle, connecté au module d'insertion et configuré pour convertir le signal parallèle dans lequel le ST est inséré en un signal sériel à envoyer au second dispositif de réseau par le module d'envoi ;
un temporisateur, configuré pour temporiser ; et
un module de collecte, connecté au temporisateur et configuré pour collecter des informations temporelles du temporisateur ; dans lequel les informations temporelles sont une composante des informations de synchronisation.

15. Dispositif de réseau selon la revendication 13, dans lequel le module de réception est configuré pour recevoir un signal sériel à partir d'un support de transmission, et
le dispositif de réseau comprenant en outre :
un convertisseur série-parallèle configuré pour convertir le signal sériel en le signal parallèle, dans lequel le signal parallèle est la séquence de bits, et le module d'extraction est configuré pour extraire, au niveau de la couche physique, le ST du signal parallèle en faisant correspondre l'octet de synchronisation local avec le signal parallèle, et obtenir les informations de synchronisation transportées par l'octet de synchronisation dans le ST ;
un module de calcul, connecté au module d'extraction et configuré pour calculer un décalage temporel sur la base des informations de synchronisation ; et
un temporisateur connecté au module de calcul et configuré pour calibrer sa propre valeur temporelle en fonction du décalage temporel.
